# EUROPEAN PATENT SPECIFICATION

(11) **EP 2 349 947 B1**
(45) Date of publication and mention of the grant of the patent: **06.08.2014**
(21) Application number: 09791642.3
(22) Date of filing: 19.08.2009
(51) Int. Cl.: C04B 33/04, C04B 35/195

(54) **A BLENDED HYDROUS KAOLIN PRODUCT, A METHOD FOR MAKING CORDIERITE BY SINTERING THE BLEND AND THE OBTAINED CORDIERITE**
GEMISCH AUS WASSERHALTIGEM KAOLINPRODUKT, METHODE ZUR HERSTELLUNG VON CORDIERIT DURCH SINTERN DES GEMISCHS UND DARAUS RESULTIERENDER CORDIERIT
PRODUIT EN ARGILE DE KAOLIN HYDRATÉ MÉLANGÉ, METHODE DE PRODUCTION D'UNE CORDIÉRITE PAR FRITTAGE DUDIT MÉLANGE ET CORDIÉRITE OBTENUE

(30) Priority: 18.08.2009 US 543228; 19.08.2008 US 90024 P
(43) Date of publication of application: 03.08.2011
(73) Proprietor: BASF Corporation, Florham Park, NJ 07932 (US)
(72) Inventor: MATHUR, Sharad, Tega Cay SC 29708 (US); SIGMAN, Michael, B., Haddock GA 31033 (US)
(74) Representative: Altmann, Andreas
(86) International application number: PCT/US2009/054251
(87) International publication number: WO 2010/022115

(56) References cited:
- EP-A1- 0 549 885
- WO-A1-01/04070
- WO-A1-98/50161
- WO-A2-2005/019349

## Description

### FIELD OF THE INVENTION

This invention is related to a kaolin product as a raw product for use in specialized applications. In particular, this invention is related to a blended hydrous kaolin clay product for use as a raw material component in the formation and sintering of cordierite ceramic honeycombs.

### BACKGROUND OF THE INVENTION

Cordierite (Mg₂[Al₄Si₅O₁₈]) ceramics are the preferred materials for use in automotive catalytic substrates, diesel particulate filter applications, and other high temperature articles, such as NOₓ adsorber substrates, catalyst substrates, and honeycomb articles due to the combination of their low cost of production and physical properties such as low coefficient of thermal expansion (CTE) and resistance to thermal shock. Cordierite substrates are typically produced from naturally occurring minerals such as talc and kaolin due to their lower cost and high purity. Cordierite materials are typically manufactured by mixing a raw batch that may include talc, alumina, aluminum hydroxide, kaolin and silica. The batch may then blended with a binder (such as methylcellulose) and a lubricant (such as sodium stearate) to form a plastic mixture. This plastic mixture is then formed into a green body and sintered.

The cordierite crystal structure consists of a hexagonal ring of tetrahedra that are joined at each intersection of the hexagonal ring by five silicon and one aluminum atom. The hexagonal rings are connected together by additional aluminum tetrahedral and magnesium octhedra resulting in two interstitial vacancies per unit cell that are oriented along the c-axis of the crystal structure. See, B.P. Saha, R. Johnson, I. Ganesh, G.V.N. Rao, S. Bhattacharjee, T.R. Mahajan; Materials Chemistry and Physics, 67 (2001), 140-145. The interstitial vacancies result in a contraction along the c-axis of the crystal structure and an expansion along the a- and b-axes with increasing temperature. See, R.J. Beals, R.L. Cook, J. Am. Ceram. Soc., 35(2), (1952), 53-57. The anisotropic CTE resulting from the cordierite crystal structure offers the opportunity to engineer improved cordierite honeycombs by orienting the c-axis of the individual crystals within the ceramic in the direction of extrusion. Cordierite crystal orientation has been observed to cause a significant net decrease in the overall CTE of the ceramic honeycomb. See, I.M. Lachman, R.M. Lewis, U.S. Patent No. 3,885,977, May 27,1975; and R. Johnson, I. Ganesh, B.P. Saha, G.V. Narasimha Rao, Y.R. Mahajan, J. Mater. Scl., 38 (2003), 2953-61.

In order to orient the cordierite crystals within the ceramic, platy raw materials may be used. In particular, talc and kaolin have platy crystal structures that may be preferentially oriented parallel to the direction of extrusion when passed through an extrusion die at high pressure. Delamination of hydrous kaolin may be utilized to increase the platyness of the clay resulting in increased alignment during extrusion. Subsequent sintering of the green body results in the formation of a ceramic with preferential orientation of cordierite crystals within the honeycomb structure oriented along the c-axis relative to the extrusion direction. See, I.M. Lachman et al., U.S. Patent No. 4,772,580, Sept. 20, 1988. Although talc and kaolin both play a role in orienting the sintered cordierite crystal structure, kaolin is considered to be the most significant contributor because it provides the only source of ordered Al within the green body. Since Si comes from both talc and kaolin raw material sources and Mg (talc as the source) makes up a smaller atomic and weight percent of the final cordierite crystal, Al (derived from kaolin) is expected to have the greatest contribution to the final cordierite crystal structure. See, Saha et al.

One drawback with producing a highly ordered cordierite substrate is that the difference in thermal expansion along the axial and transverse directions In the honeycomb becomes so large that cracking occurs resulting in reduced thermal shock resistance. *See,* Saha et al. Although this is a concern for catalyst substrates, it is of particular significance to honeycombs produced for diesel particulate filter applications where increased porosity lowers the shock resistance of the resulting ceramic. In addition, the extrusion of highly oriented raw materials parallel to the axial direction of the substrate lowers the strength of the green body resulting in sagging of the body, particularly in thin wall applications. To alleviate these problems, calcined clay often must be added in combination with delaminated hydrous clay. This addition moderates particle alignment providing strength within the green body, but at the expense of degrading the cordierite crystal alignment within the sintered ceramic and lowering the resulting coefficient of thermal expansion. Calcination produces a coarser particle that is less platy in nature particularly compared to delaminated hydrous clay.

WO2005/019349 discloses that crude hydrous kaolin was blunged in water as a blend of 75% coarse Cretaceous crude and 25% fine tertiary crude. After degritting this crude through a Dorr-Cone, sandbox and 100 mesh screen, the crude was fractionated on a Bird Machine and centrifuged to obtain a fine fraction of 92% less than two microns as measured on a Sedigraph 5100. 91.3% of the particles are less than 2 microns and 79.7% are less than 1 micron. The kaolin can be conditioned in high shear conditions, i.e. delaminated. The kaolin blend may be useful for making a cordierite substrate.

WO98/50161 discloses that crude hydrous kaolin was blunged in water as a blend of 75% coarse Cretaceous crude and 25% fine tertiary crude. After degritting this crude through a Dorr-Cone, sandbox and 100 mesh screen, the crude was fractionated on a Bird Machine and centrifuged to obtain a fine fraction of 92% less than two microns as measured on a Sedigraph 5100. All fractions can be selected for delamination.

EP0549885 discloses a method for making an improved cordierite substrate from a mixture comprising delaminated kaolin (average particle diameter approximately 1.5 µm), calcined kaolin (average particle diameter approximately 1.2 µm), talc and alumina. Impurities such as TiO2, CaO, K2O, Na2O, Fe2O3, R2O5 or the like are preferably present in an amount no greater than 2.5%. Particularly, reduction of the amounts of alkali components such as CaO, K2O and N2O leads to improved thermal expansion properties of the honeycomb structures. The amount of P2O5 should be substantially zero or less than 0.1%.

### SUMMARY OF THE INVENTION

This invention is directed to a blended hydrous kaolin clay product according to claim 1. In an embodiment, the platy kaolin is a delaminated kaolin clay. The clay product can be used as a raw material component in the formation and sintering of cordierite ceramic honeycombs.

This invention Is also directed to a method of forming a blended hydrous kaolin clay product that comprises blending clay mined from tertiary crude deposits as the fine component; and Cretaceous or secondary clay as the coarser component. The blended kaolin clay product comprises a total particle mass where about 75% or more of the total particle mass is less than 2 um and more than about 55% of the total particle mass is less than 1 um as measured by a Sedigraph 5100 and would be suitable for improved cordierite production. It comprises mixing a coarse component containing less than 85% of the particle mass less than 2 µm with a tertiary fine component where 95% or more of the mass of the sample is less than 1 um and more than 85% of the sample is less than 0.5 um in particle size.

### DETAILED DESCRITPION OF THE INVENTION

This invention is related to a blended hydrous kaolin clay product that can be used as a raw material component In the sintering of cordierite ceramic honeycombs. The blended product is composed of a coarse, platy, hydrous kaolin clay and a fine hydrous kaolin clay. The combination of these two materials is expected to enhance the thermomechanical properties of cordierite honeycombs by creating a mechanism to manipulate the degree of cordierite crystal orientation in the final product.

The use of fine clay in combination with a larger delaminated clay would have several advantages. The fine clay could be used to moderate orientation of the delaminated kaolin and talc during extrusion resulting In a cordierite crystal structure that is oriented to maintain a low coefficient of thermal expansion while minimizing the degree of anisotropic thermal expansion in the axial and transverse directions of the ceramic honeycomb. This would reduce the degree of microcracking associated with temperature variations typically observed during normal catalytic converter or filtering operations. The fine particle size clay also enables improved particle packing within the green body. The finer hydrous clay would fill voids between other larger raw material crystals that calcined clay could not. The improved particle packing within the green body would increase the green strength eliminating product deformation prior to drying and firing of the substrate.

It is desirable to have a more homogenous distribution of cordierite precursors within the green body which would potentially be enabled by the addition of a fine hydrous kaolin component. Increased homogeneity would enable improved conversion of the precursors into cordierite and limit the formation of impurity phases within the crystal structure that would increase the coefficient of thermal expansion of the overall ceramic. The increased surface area and reduced crystallinity associated with a finer, hydrous clay would also have a lower reaction temperature that would enable reduced temperature or firing time of the substrate without impacting the overall conversion to cordierite. This would reduce the energy costs associated with product manufacture.

One embodiment of this invention is the use of a platy (but not necessarily delaminated) coarse, hydrous kaolin component in combination with a fine, hydrous kaolin component. In this embodiment, the fine kaolin would serve the same function of moderating platelet orientation during extrusion of the cordierite-forming blend, but if a non-delaminated coarse component is used, then the ratio of the fine component relative to the coarse component would be reduced to compensate for using a non-delaminated (less platy) coarse component.

In another embodiment of the invention, a blended hydrous kaolin clay product consists of a blend of (1) a delaminated hydrous kaolin clay with a mean particle diameter of less than 2 um (the coarse kaolin component), and (2) a fine hydrous kaolin clay with a mean particle diameter of less than 1 um (the fine kaolin component). The particle sizes have been measured using a Micrometrics Sedigraph Model 5100 instrument. The weight ratio of the coarse kaolin component to the fine kaolin component can be in the range of from about 10:90 to about 90:10 or, alternatively, in the range of about 50:50 to about 90:10, or alternatively, in the range of about 70:30 to about 90:10.. The precise selection of the weight ratio of the coarse kaolin component to the fine kaolin component will depend on the composition sought in the final product (i.e., the precise ratio of the kaolin blend will depend on the other raw materials and the precise amounts which comprise the batch used in making the cordierite), and the desired properties of the final product (e.g., improved coefficient of thermal expansion, improved dimensional accuracy, reduced tendency toward cracking, overall porosity, and pore size). A person skilled in the art may know, without undue experimentation, the ratio of the coarse to fine kaolin components needed depending on the other raw materials used in making the cordierite. The blending of the coarse and fine kaolin components could take place at any point during the mining and processing of the clay. This includes mixing the individual crude components during initial makedown, prior to spray drying, after spray drying, or as a product in slurry form. The coarse and fine kaolin components could also be added to the cordierite raw materials batch as individual components as long as the net result is the addition of two kaolin components that would form a blend with the properties outlined in this document. The invention is the use of clay mined from tertiary crude deposits as the fine component of the blend in combination with a Cretaceous or secondary clay. Kaolin crudes have physical properties that reflect the time period in which they were formed. Tertiary crudes are typically finer in size, have different trace elemental profiles such as higher Fe₂O₃ content, and have higher densities than clays deposited at other time periods. Tertiary deposits based clay consists of Cretaceous clay (originally deposited 65 to 136 million years ago) that was eroded and redeposited 37 to 53 million years ago. Blends consisting of coarse and tertiary kaolin that are finer than 75% at 2 um and 55% at 1 um, respectively, as measured by a Sediagraph 5100 would be suitable for improved cordierite production. Blended samples meeting these criteria have been produced by mixing a delaminated, coarse component, in which less than 85% of the total particle mass is less than 2 um, with a tertiary fine component, in which 95% or more of the mass of the sample is less than 1 um and more than 85% of the fine component sample is less than 0.5 um in particle size. Impurity profiles for the blended kaolin samples containing < 0.1% Na₂O, < 0.25% K₂O, < 1.75% TiO₂, < 0.6% Fe₂O₃, < 0.1% CaO, and < 0.1% P₂O₅ should be met in order to produce high performance cordierite.

### EXAMPLE 1

Example 1 contains several samples produced from blends of fine particle size kaolin and coarse, delaminated kaolin streams obtained from BASF's kaolin manufacturing operations. The coarse delaminated streams are derived from two different sources of coarse, white clays in the Middle Georgia area. These samples are labeled Coarse #1 and #2. Coarse sample #1 (∼56% solids) was delaminated, flocked with acid and alum, filtered and redispersed with a polyacrylate dispersant. Coarse sample #2 (∼54% solids) was delaminated and did not require further processing other than addition of polyacrylate because of high solids processing. The fine clays consisted of a Tertiary kaolin (T1) mined from the Middle Georgia area and a Tertiary kaolin (T2) mined from the East Georgia area. Both of the Tertiary kaolins were flocked with acid and alum, filtered, and redispersed with a polyacrylate dispersant. The individual samples were produced by blending the delaminated and fine particle size kaolin streams. Sample #1 contains a 90% by weight blend of Coarse #1 and 10 wt% of T1, Sample #2 contains a 90 wt% of Coarse #2 and 10 wt% of T1. Sample #3 contains 90 wt% of Coarse #1 and 10 wt% of T2. Sample #4 contains 90 wt% of Coarse #2 and 10 wt% of T2. Table 1 contains elemental analysis of the four blended samples produced. Table 2 contains the particle size distributions of each of the blends as well as the coarse, delaminated and fine, hydrous kaolin components used.

**Table 1**

| Sample ID | %SiO₂ | %Al₂O₃ | %Na₂O | %K₂O | %TiO₂ | %Fe₂O₃ | %CaO | %MgO | %P₂O₅ | %SO₃ | %LOI |
|---|---|---|---|---|---|---|---|---|---|---|---|
| Sample 1 | 44.5 | 39.2 | 0.041 | 0.13 | 1.30 | 0.43 | 0.03 | 0.03 | 0.06 | 0.04 | 14.2 |
| Sample 2 | 44.3 | 39.4 | 0.019 | 0.05 | 1.39 | 0.31 | 0.04 | 0.02 | 0.06 | 0.03 | 14.3 |
| Sample 3 | 43.8 | 39.9 | 0.042 | 0.13 | 1.29 | 0.45 | 0.03 | 0.03 | 0.05 | 0.03 | 14.2 |
| Sample 4 | 44.2 | 39.5 | 0.017 | 0.06 | 1.34 | 0.33 | 0.04 | 0.02 | 0.03 | 0.02 | 14.3 |
| Coarse #1 | 44.5 | 39.2 | 0.054 | 0.13 | 1.38 | 0.38 | 0.03 | 0.03 | 0.04 | 0.07 | 14.0 |
| Coarse #2 | 44.6 | 39.2 | 0.024 | 0.04 | 1.48 | 0.24 | 0.04 | 0.02 | 0.07 | 0.04 | 14.1 |

**Table 2**

| PSD | Sample 1 | Sample 2 | Sample 3 | Sample 4 | Coarse #1 | Coarse #2 | T1 | T2 |
|---|---|---|---|---|---|---|---|---|
| %<10 um | 99 | 99 | 100 | 99 | 98 | 99 | 99 | 100 |
| %<5 um | 98 | 96 | 97 | 96 | 90 | 95 | 99 | 98 |
| %<2 um | 83 | 81 | 83 | 81 | 79 | 73 | 98 | 98 |
| %<1 um | 67 | 64 | 67 | 64 | 61 | 59 | 97 | 98 |
| %<0.5 um | 49 | 43 | 48 | 44 | 39 | 42 | 90 | 92 |
| %< 0.2 um | 23 | 20 | 23 | 21 | 17 | 20 | 52 | 20 |

### EXAMPLE 2

Example 2 contains another embodiment of the described invention. The blend was produced with a fine, hydrous and a coarse, delaminated kaolin with the blend ratio adjusted to increase the fine component. The sample was produced using coarse, white kaolin that was delaminated prior to blending. The fine kaolin was derived from a Tertiary kaolin crude mined from the Middle Georgia area that was flocked with acid and alum, filtered, and redispersed with a polyacrylate dispersant. Sample #5 contains a 70% by weight blend of the coarse, delaminated clay and 30 wt% of a Middle Georgia Tertiary kaolin. Table 3 contains the elemental analysis obtained from this sample and Table 4 shows the resulting particle size distribution.

**Table 3**

| Sample ID | %SiO₂ | %Al₂O₃ | %Na₂O | %K₂O | %TiO₂ | %Fe₂O₃ | %CaO | %MgO | %P₂O₅ | %SO₃ | %LOI |
|---|---|---|---|---|---|---|---|---|---|---|---|
| Sample 6 | 44.8 | 38.7 | 0.026 | 0.08 | 1.18 | 0.44 | 0.04 | 0.03 | 0.08 | 0.05 | 14.44 |

**Table 4**

| PSD | Sample 5 | Coarse #2 | T1 |
|---|---|---|---|
| %<10 um | 99 | 96 | 100 |
| %< 5 um | 97 | 96 | 100 |
| %< 2 um | 86 | 80 | 98 |
| %< 1 um | 72 | 60 | 98 |
| %< 0.5 um | 54 | 36 | 93 |
| %< 0.2 um | 27 | 14 | 57 |

While the present invention has been particularly described, in conjunction with a specific preferred embodiment, it is evident that many alternatives, modifications and variations will be apparent to those skilled in the art in light of the foregoing description.

## Claims

1. A blended hydrous kaolin clay product comprising
a) a platy coarse kaolin clay; and
b) a fine, hydrous kaolin clay,
wherein the platy coarse kaolin clay has a mean particle size of less than 2 µm in diameter and the fine, hydrous kaolin has a mean particle size of less than 1 µm in diameter,
wherein the clay mined from tertiary crude deposits has a total particle mass such that more than 75 % of the particles are less than 2 µm and more than 55 % of the particles are less than 1 µm as measured by a Sediagraph 5100,
wherein the coarse kaolin clay component is a Cretaceous or secondary clay and the fine kaolin clay component is a clay mined from tertiary crude deposits, and
wherein the impurity profile for the blended clay product is less than 0.1 % Na₂O, less than 0.25 % K₂O, less than 1.75 % TiO₂, less than 0.6 % Fe₂O₃, less than 0,1 % CaO, and less than 0.1 % P₂O₅ by weight.

2. The clay product of claim 1 wherein the platy coarse kaolin clay is a delaminated kaolin clay.

3. The clay product of claim 1 wherein the weight ratio between the coarse kaolin clay component and the fine kaolin clay component is between 10:90 and 90:10, preferably between 50:50 and 90:10, and more preferably between 60:40 and 90:10.

4. The clay product of claim 1 wherein the weight ratio between the tertiary crude deposits based clay component and the Cretaceous or secondary deposits based clay component is between 90:10 and 10:90, preferably between 50:50 and 10:90, and more preferably between 40:60 and 10:90.

5. The clay product of claim 1 wherein
a) said delaminated coarse kaolin clay contains less than 85 % of the total particle mass less than 2 µm; and
b) said fine kaolin clay contains 95 % or more of the mass less than 1 µm and more than 85 % of the mass less than 0.5 µm in particle size,

6. The clay product of claim 5 wherein said fine clay is mined from tertiary crude deposits.

7. The clay product of claim 6 wherein said tertiary clay has a total particle mass of more than 75 % less than 2 µm and more than 55 % less than 1 µm as measured by a Sedia-graph 5100.

8. A method of making cordierite comprising: mixing, extruding and sintering a cordierite precursor comprising a blended hydrous kaolin clay product comprising
a) a platy coarse kaolin clay; wherein said platy kaolin clay component has a mean particle size of less than 2 µm in diameter; and
b) a fine, hydrous kaolin clay, wherein said fine kaolin clay component has a mean particle size of less than 1 µm in diameter,
wherein the coarse kaolin clay component is a Cretaceous or secondary clay and the fine kaolin clay component is a clay mined from tertiary crude deposits,
wherein the clay mined from tertiary crude deposits has a total particle mass such that more than 75 % of the particles are less than 2 µm and more than 55 % of the particles are less than 1 µm as measured by a Sediagraph 5100, and
wherein the impurity profile for the blended clay product is less than 0.1 % Na₂O, less than 0.25 % K₂O, less than 1.75 % TiO₂, less than 0.6 % Fe₂O₃, less than 0,1 % CaO, and less than 0.1 % P₂O₅ by weight.

9. The method of claim 8 wherein the platy kaolin clay is delaminated kaolin clay.

10. The method of claim 8 wherein the weight ratio between the coarse kaolin clay component and the fine kaolin clay component is between 50:50 and 90:10.

11. A cordierite product formed by the process of claim 8.

## Patentansprüche

1. Gemisch aus wasserhaltigem Kaolintonprodukt, umfassend:
a) einen plättchenförmigen, groben Kaolinton; und
b) einen feinen, wasserhaltigen Kaolinton,
wobei der plättchenförmige, grobe Kaolinton eine durchschnittliche Teilchengröße von weniger als 2 µm im Durchmesser aufweist und das feine, wasserhaltige Kaolin eine durchschnittliche Teilchengröße von weniger als 1 µm Durchmesser aufweist,
wobei aus tertiären Rohölablagerungen abgebauter Ton eine Gesamtteilchenmasse aufweist, sodass mehr als 75 % der Teilchen kleiner als 2 µm sind und mehr als 55 % der Teilchen kleiner als 1 µm sind, wie von einem Sedigraph 5100 gemessen,
wobei der grobe Kaolintonbestandteil eine Kreide oder Sekundärton und der feine Kaolintonbestandteil ein Ton ist, der aus tertiären Rohölablagerungen abgebaut wird, und
wobei das Verunreinigungsprofil des Mischtonprodukts weniger als 0,1 Gew.-% Na₂O, weniger als 0,25 Gew.-% K₂O, weniger als 1,75 Gew.-% TiO₂, weniger als 0,6 Gew.-% Fe₂O₃, weniger als 0,1 Gew.-% CaO und weniger als 0,1 Gew.-% P₂O₅ beträgt.

2. Tonprodukt nach Anspruch 1, wobei der plättchenförmige, grobe Kaolinton delaminierter Kaolinton ist.

3. Tonprodukt nach Anspruch 1, wobei das Gewichtsverhältnis zwischen dem groben Kaolintonbestandteil und dem feinen Kaolintonbestandteil zwischen 10:90 und 90:10, vorzugsweise zwischen 50:50 und 90:10 und mehr bevorzugt zwischen 60:40 und 90:10 beträgt.

4. Tonprodukt nach Anspruch 1, wobei das Gewichtsverhältnis zwischen dem auf tertiären Rohölablagerungen basierenden Tonbestandteil und der Kreide oder dem auf sekundären Ablagerungen basierenden Tonbestandteil zwischen 90:10 und 10:90, vorzugsweise zwischen 50:50 und 10:90 und mehr bevorzugt zwischen 40:60 und 10:90 beträgt.

5. Tonprodukt nach Anspruch 1, wobei
a) der delaminierte grobe Kaolinton weniger als 85 % der Gesamtteilchenmasse von weniger als 2 µm enthält; und
b) der feine Kaolinton 95 % oder mehr der Masse von weniger als 1 µm und mehr als 85 % der Masse von weniger als 0,5 µm Teilchengröße enthält.

6. Tonprodukt nach Anspruch 5, wobei der feine Ton aus tertiären Rohölablagerungen abgebaut wird.

7. Tonprodukt nach Anspruch 6, wobei der tertiäre Ton eine Gesamtteilchenmasse von mehr als 75 % mit weniger als 2 µm und mehr als 55 % mit weniger als 1 µm aufweist, wie von einem Sedigraph 5100 gemessen.

8. Verfahren zum Herstellen eines Cordierits, umfassend: Mischen, Extrudieren und Sintern eines Cordieritvorläufers, umfassend ein Gemisch aus wasserhaltigem Kaolintonprodukt, umfassend:
a) einen plättchenförmigen Kaolinton, wobei der plättchenförmige Kaolintonbestandteil eine durchschnittliche Teilchengröße von weniger als 2 µm Durchmesser aufweist; und
b) einen feinen, wasserhaltigen Kaolinton, wobei der feine Kaolintonbestandteil eine durchschnittliche Teilchengröße von weniger als 1 µm Durchmesser aufweist;
wobei der grobe Kaolintonbestandteil eine Kreide oder Sekundärton und der feine Kaolintonbestandteil ein Ton ist, der aus tertiären Rohölablagerungen abgebaut wird, und
wobei der aus tertiären Rohölablagerungen abgebaute Ton eine Gesamtteilchenmasse aufweist, sodass mehr als 75 % der Teilchen kleiner als 2 µm sind und mehr als 55 % der Teilchen kleiner als 1 µm sind, wie mit einem Sedigraph 5100 gemessen,
wobei das Verunreinigungsprofil des Mischtonprodukts weniger als 0,1 Gew.-% Na₂O, weniger als 0,25 Gew.-% K₂O, weniger als 1,75 Gew.-% TiO₂, weniger als 0,6 Gew.-% Fe₂O₃, weniger als 0,1 Gew.-% CaO und weniger als 0,1 Gew.-% P₂O₅ beträgt.

9. Verfahren nach Anspruch 8, wobei der plättchenförmige Kaolinton delaminierter Kaolinton ist.

10. Verfahren nach Anspruch 8, wobei das Gewichtsverhältnis zwischen dem groben Kaolintonbestandteil und dem feinen Kaolintonbestandteil zwischen 50:50 und 90:10 beträgt.

11. Cordieritprodukt, das durch das Verfahren nach Anspruch 8 hergestellt wird.

## Revendications

1. Produit en argile kaolinique hydraté mélangé, comprenant :
a) une argile kaolinique grossière lamellaire ; et
b) une argile kaolinique fine hydratée,
dans lequel l'argile kaolinique grossière lamellaire a une taille de particule moyenne inférieure à 2 µm de diamètre et l'argile kaolinique fine hydratée a une taille de particule moyenne inférieure à 1 µm de diamètre,
dans lequel l'argile extraite de gisements tertiaires bruts a une masse particulaire totale telle que plus de 75 % des particules mesurent moins de 2 µm et plus de 55 % des particules mesurent moins de 1 µm, les mesures étant réalisées avec un instrument Sediagraph 5100,
dans lequel l'argile kaolinique grossière constitutive est une argile du Crétacé ou secondaire et l'argile kaolinique fine constitutive est une argile extraite de gisements tertiaires bruts, et
dans lequel le profil d'impuretés du produit en argile mélangé est de moins de 0,1 % de Na₂O, moins de 0,25 % de K₂O, moins de 1,75 % de TiO₂, moins de 0,6 % de Fe₂O₃, moins de 0,1 % de CaO, et moins de 0,1 % de P₂O₅ en poids.

2. Produit en argile selon la revendication 1, dans lequel l'argile kaolinique grossière lamellaire est une argile kaolinique délaminée.

3. Produit en argile selon la revendication 1, dans lequel le rapport pondéral entre l'argile kaolinique grossière constitutive et l'argile kaolinique fine constitutive est de 10:90 à 90:10, préférablement de 50:50 à 90:10, et plus préférablement de 60:40 à 90:10.

4. Produit en argile selon la revendication 1, dans lequel le rapport pondéral entre l'argile constitutive provenant de gisements tertiaires bruts et l'argile constitutive provenant de gisements du Crétacé ou secondaire est de 90:10 à 10:90, préférablement de 50:50 à 10:90, et plus préférablement de 40:60 à 10:90.

5. Produit en argile selon la revendication 1, dans lequel :
a) ladite argile kaolinique grossière délaminée contient moins de 85 % de la masse particulaire totale dans laquelle les particules mesurent moins de 2 µm ; et
b) ladite argile kaolinique fine contient 95 % ou plus de la masse dans laquelle les particules mesurent moins de 1 µm et plus de 85 % de la masse dans laquelle les particules mesurent moins de 0,5 µm.

6. Produit en argile selon la revendication 5, dans lequel ladite argile fine est extraite de gisements tertiaires bruts.

7. Produit en argile selon la revendication 6, dans lequel ladite argile tertiaire a une masse particulaire totale dans laquelle plus de 75 % des particules mesurent moins de 2 µm et plus de 55 % des particules mesurent moins de 1 µm, les mesures étant réalisées avec un instrument Sediagraph 5100.

8. Procédé de fabrication de cordiérite, comprenant :
le mélange, l'extrusion et le frittage d'un précurseur de cordiérite comprenant un produit en argile kaolinique hydraté mélangé comprenant :
a) une argile kaolinique grossière lamellaire, ladite argile kaolinique lamellaire constitutive ayant une taille de particule moyenne inférieure à 2 µm de diamètre ; et
b) une argile kaolinique fine hydratée, l'argile kaolinique fine constitutive ayant une taille de particule moyenne inférieure à 1 µm de diamètre,
dans lequel l'argile kaolinique grossière constitutive est une argile du Crétacé ou
secondaire et l'argile kaolinique fine constitutive est une argile extraite de gisements tertiaires bruts, et
dans lequel l'argile extraite de gisements tertiaires bruts a une masse particulaire totale telle que plus de 75 % des particules mesurent moins de 2 µm et plus de 55 % des particules mesurent moins de 1 µm, les mesures étant réalisées avec un instrument Sediagraph 5100, et
dans lequel le profil d'impuretés du produit en argile mélangé est de moins de 0,1 % de Na₂O, moins de 0,25 % de K₂O, moins de 1,75 % de TiO₂, moins de 0,6 % de Fe₂O₃, moins de 0,1 % de CaO, et moins de 0,1 % de P₂O₅ en poids.

9. Procédé selon la revendication 8, dans lequel l'argile kaolinique lamellaire est une argile kaolinique délaminée.

10. Procédé selon la revendication 8, dans lequel le rapport pondéral entre l'argile kaolinique grossière constitutive et l'argile kaolinique fine constitutive est de 50:50 à 90:10.

11. Produit sous forme de cordiérite, formé par le procédé selon la revendication 8.
